# EUROPÄISCHE PATENTSCHRIFT

(11) **EP 0 957 296 B1**
(45) Veröffentlichungstag und Bekanntmachung des Hinweises auf die Patenterteilung: **19.03.2003**
(21) Anmeldenummer: 99107373.5
(22) Anmeldetag: 22.04.1999
(51) Int. Cl.: F16H 63/20, F16H 61/18

(54) **Vorrichtung zum Anwählen und Schalten zwischen vorgegebenen Positionen**
Device for selecting and shifting between predetermined positions
Dispositif pour sélectionner et changer entre positions prédéterminées

(30) Priorität: 12.05.1998 DE 19821117
(43) Veröffentlichungstag der Anmeldung: 17.11.1999
(73) Patentinhaber: Volkswagen Aktiengesellschaft, 38436 Wolfsburg (DE)
(72) Erfinder: Gudlin, Tamas, Dr.-Ing., 38102 Braunschweig (DE); Fraschke, Erich, 38179 Schwülper (DE)

(56) Entgegenhaltungen:
- EP-A- 0 803 664
- GB-A- 300 014
- US-A- 3 292 450
- US-A- 3 815 436
- US-A- 4 706 514
- PATENT ABSTRACTS OF JAPAN vol. 098, no. 004, 31. März 1998 (1998-03-31) -& JP 09 323559 A (NISSAN MOTOR CO LTD), 16. Dezember 1997 (1997-12-16)
- PATENT ABSTRACTS OF JAPAN vol. 098, no. 011, 30. September 1998 (1998-09-30) & JP 10 157480 A (FUJI KIKO CO LTD), 16. Juni 1998 (1998-06-16)

## Beschreibung

Die Erfindung betrifft eine Vorrichtung zum Schalten zwischen vorgegebenen Positionen, insbesondere zum Schalten zwischen Gängen eines Fahrzeuggetriebes, mit einer Betätigungseinrichtung, mittels derer die Positionen ansteuerbar sind, wobei eine bevorzugte und eine erschwert erreichbare, nicht bevorzugte Position gegeben ist.

Solche gattungsbildenden Vorrichtungen sind insbesondere bei Fahrzeuggetrieben, aber auch bei anderen Anwendungen bekannt.

Fahrzeuggetriebe weisen zumeist mehrere vorgegebene Schaltpositionen, also Gänge, auf, zwischen denen ein Fahrer entsprechend der Fahrgeschwindigkeit eines Fahrzeuges wählen kann. Die Wahl der einzelnen Positionen erfolgt über eine Betätigungseinrichtung. Bekanntlich haben Fahrzeuge bzw. deren Fahrzeuggetriebe neben einem oder mehreren Vorwärtsgängen, deren Lage vorliegend als bevorzugte Position bezeichnet wird, auch einen Rückwärtsgang, dessen Lage als nicht bevorzugte Position bezeichnet ist.

Bei einem Schalten aus einer bevorzugten Position in die nicht bevorzugte Position, also bei einem Schalten aus einem Vorwärtsgang in den Rückwärtsgang, besteht die Gefahr der Beschädigung des Fahrzeuggetriebes. Die nicht bevorzugte Position ist daher in der Regel nur erschwert erreichbar.

Zur Realisierung dieser erschwerten Erreichbarkeit ist es bekannt, diese Position erst nach einer Verschiebung eines Schalthebels entlang seiner Längsachse freizugeben. Eine andere bekannte Lösung weist einen Zugring auf, dessen Betätigung zur Freigabe der nicht bevorzugten Position erforderlich ist. Auch das Vorsehen eines erhöhten Kraftaufwandes ist bekannt. Der Aufwand zur Realisierung dieser bekannten Vorrichtungen ist jedoch relativ hoch, oder - wie im letzteren Fall - die Sperrwirkung nicht immer ausreichend.

Eine Vorrichtung gemäß dem Oberbegriff des Anspruch 1 ist aus US 3 292 450 bekannt.

Der Erfindung liegt die Aufgabe zugrunde, die gattungsgemäße Vorrichtung derart weiterzubilden, daß bei gleichbleibend hoher Sicherheit gegen ein unbeabsichtigtes Schalten in die nicht bevorzugte Position der Herstellungsaufwand vermindert wird. Diese Aufgabe wird durch die Merkmale des Anspruches 1 gelöst.

Demnach ist der Betätigungseinrichtung eine Führung zugeordnet, die die Bewegungsmöglichkeit der Betätigungseinrichtung begrenzt, die nur entlang der Führung gegeben ist. Zum Anwählen bzw. Schalten in die nicht bevorzugte Position ist eine Drehbewegung der Betätigungseinrichtung erforderlich.

Die Führung erlaubt ein Schalten in die bevorzugte Position. Um aus dieser bevorzugten Position oder einer Neutralstellung in die nicht bevorzugte Position gelangen zu können, muß die Betätigungseinrichtung der Drehbewegung unterworfen werden. Wird versucht, ohne die Drehbewegung in die nicht bevorzugte Position zu schalten, erfolgt eine Sperrung. Diese Sperrung ist realisiert durch die Führung.

Dadurch wird verhindert, daß ein unbeabsichtigter Schaltvorgang in die nicht bevorzugte Position erfolgt

Die Führung erweist sich als relativ einfach und ist somit ein kostengünstig herstellbares Bauteil.

Die Führung kann eine Aussparung aufweisen, in die eine mit der Betätigungseinrichtung zusammenarbeitende Auskragung eingreift. Die Aussparung ist dann derart ausgebildet, daß einerseits die bevorzugte Position leicht erreichbar ist, beispielsweise durch ein Verschieben der Betätigungseinrichtung in Richtung der Position und anderseits ein Schalten in die nicht bevorzugte Position ohne Drehbewegung verhindert wird. Die Bewegungsmöglichkeit der Betätigungseinrichtung ist durch die Aussparung dadurch vorbestimmt, daß die Auskragung in diese eingreift. Eine von der Aussparung abweichende Bewegungsform ist daher zuverlässig verhindert.

Zumeist sind bei einem Fahrzeuggetriebe mehrere bevorzugte Positionen, hier also Gänge, vorgesehen. Zum Erreichen einer der Gänge muß die Betätigungseinrichtung zuerst in eine entsprechende Gasse der Gänge bewegt und anschließend in dieser Gasse der Gang eingelegt werden. Bei dem heutigen Standart sind bei Personenkraftfahrzeugen zumeist fünf Vorwärtsgänge und ein Rückwärtsgang vorgesehen. Dafür kann das Fahrzeuggetriebe als ein drei - oder vier - Gassen - Getriebe ausgebildet sein. Auch bei diesen Konstellationen ist die vorliegende Erfindung anwendbar:

Dafür kann die Betätigungseinrichtung einen Schalthebel aufweisen, der an einem Fuß gelenkig gelagert und an dem die Auskragung angeordnet ist. Die Anordnung der Auskragung relativ zu dem Schalthebel einerseits und die dazu korrespondierende Führung anderseits kann dann derart erfolgen, daß die Auswahl der einzelnen Gassen eine Schwenkbewegung der Auskragung hervorruft, während der Schaltvorgang die Auskragung um ihre Längsachse verdreht. Dafür ist die Auskragung im wesentlichen im rechten Winkel zu dem Schalthebel und achsparallel zu einem ein Wählseilzug betätigbaren Bolzen angeordnet. Ein weiterer Bolzen zur Betätigung eines Schaltzeilzuges greift im wesentlichen im rechten Winkel zu der Auskragung an.

Durch diese Ausbildung wird eine seitliche Bewegung des Schalthebels zur Wahl einer bestimmten Gasse auf die Auskragung als Schwenkbewegung und eine Zug-, Druckbewegung als Drehbewegung auf die Auskragung übertragen. Eine Verdrehung des Schalthebels zum Schalten in den Rückwärtsgang oder zur Anwahl der entsprechenden Gasse resultiert ebenfalls in eine Verdrehung der Auskragung.

Aufgrund der unterschiedlichen Bewegungsabläufe - seitliche Bewegung und Zug-, Druckbewegung einerseits und Schwenkbewegung anderseits - ist sichergestellt, daß Bedienungsfehler weitgehend vermieden werden.

Der Drehbewegung der Betätigungseinrichtung kann eine Kraft, insbesondere eine Federkraft, entgegengerichtet sein. Dadurch wird zum einen eine unbeabsichtigte Drehbewegung, beispielsweise hervorgerufen durch Vibrationen, vermieden und anderseits eine weitere Erschwerung des Schaltens in die nicht bevorzugte Position geschaffen.

Die bevorzugte Position kann in einer anderen Gasse als die nicht bevorzugte Position angeordnet sein. Dies trifft bei den vier - Gassen - Fahrzeuggetrieben zu. Dort sind die Gänge 1 / 2, 3 / 4, 5 und der Rückwärtsgang jeweils einer anderen Gasse zugeordnet. Die Gasse des Rückwärtsganges ist der Gasse der Gänge 1 / 2 nebengeordnet. Bei solch einer Konstellation kann die Führung zwei Aussparungen aufweisen, die miteinander durch eine Übergangsaussparung verbunden sein können und deren erste Aussparung den Vorwärtsgängen und die zweite Aussparung dem Rückwärtsgang zugeordnet ist. Die Längsachsen der beiden Aussparungen können zueinander versetzt angeordnet sein. Besonders vorteilhaft ist es, da kostengünstig realisierbar, wenn die beiden Aussparungen als gerade verlaufende, im wesentlich parallel zueinander angeordnete, Aussparungen ausgebildet sind.

Bei einem Wählen und Schalten zwischen den Vorwärtsgängen erfährt, wie oben bereits ausgeführt, die Auskragung eine Schwenk-, bzw. Drehbewegung um die Längsachse der Auskragung. Diese Bewegungsformen werden durch die erste Aussparung freigegeben. Die Längserstreckung der ersten Aussparung ist nun derart gewählt, daß diese in einer Stellung der dem Rückwärtsgang nebengeordneten Gasse, zumeist der Gasse der Gänge 1 / 2, endet. Bei einem Versuch, aus der Gasse 1 / 2 heraus oder einer anderen Gasse der Vorwärtsgänge, in die Gasse des Rückwärtsganges zu gelangen, stößt die Auskragung auf das die erste Aussparung begrenzende Bauteil. Vorzugsweise ist an dieser Stelle eine Aufnahme vorgesehen, die halbkreisförmig ausgebildet sein kann. Die als Stab ausgebildete Auskragung kommt dann in diese Aufnahme zum Liegen.

Seitlich neben dieser Aufnahme ist die zweite Aussparung angeordnet. Befindet sich die Auskragung in dieser zweiten Aussparung, ist die Schwenkbewegung der Auskragung bis zu der Gasse des Rückwärtsganges freigegeben. Dafür erstreckt sich die zweite Aussparung in Längsrichtung bis zu der Gasse des Rückwärtsganges. Der Beginn der zweiten Aussparung ist im Bereich des Endes der ersten Aussparung vorgesehen.

Um einen Wechsel der Auskragung von der ersten Aussparung in die zweite Aussparung zu erreichen, ist die Verdrehung der Auskragung und damit die Verdrehung der Betätigungseinrichtung erforderlich. Die Auskragung gelangt dann in die Übergangsaussparung und von dieser in die zweite Aussparung. Es ist auch möglich, die zweite Aussparung für die R-Gang-Gasse so anzuordnen, daß diese durch eine Verdrehung der Betätigungseinrichtung (des Schalthebels) in Neutralstellung (Gasse 3/4) erreichbar ist.

Die Aussparung kann auch in der Draufsicht L - förmig ausgebildet sein. Der Auskragung ist dann ein Ausleger zugeordnet Die Verbindung zwischen der Auskragung und dem Ausleger ist drehfest vorgesehen. Einer Drehbewegung des Auslegers wirkt, soweit sich der Ausleger in einer bevorzugten Position befindet, die der nicht bevorzugten Position benachbart ist, einem Anschlag entgegen.

Diese Variante eignet sich besonders für ein Drei - Gassen - Getriebe, bei dem der Rückwärtsgang in einer Gasse mit einem Vorwärtsgang angeordnet ist. Die Wahl der Gasse erfolgt über eine Schwenkbewegung der Auskragung, wie es oben beschrieben ist. Dabei wandert die Auskragung entlang dem langen Teil der Aussparung. Ist diejenige Gasse erreicht, in der sich auch die nicht bevorzugte Position, hier also der Rückwärtsgang, befindet, ist eine Verdrehung der Auskragung um deren Längsachse durch den Ausleger der Auskragung im Zusammenhang mit dem Anschlag blockiert. Der Rückwärtsgang kann mithin nicht eingelegt werden.

Zum Einlegen des Rückwärtsganges muß zuvor die Betätigungseinrichtung um deren Längsachse verdreht werden, wodurch das Ende der Auskragung samt dem Ausleger von der langen Aussparung in die kurze Aussparung der L - förmigen Ausbildung verschoben wird. In dieser Position ist der Ausleger freigegeben, eine Schaltung in den Rückwärtsgang ist möglich.

Die Erfindung wird anhand von Ausführungsbeispielen weiter erläutert.

Es zeigen, jeweils in schematisierter Darstellung,
- Figur 1: eine erste Ausführungsform der Vorrichtung,
- Figur 2: ein Schaltbild eines drei- und vier - Gassen - Getriebes,
- Figur 3a: eine Draufsicht auf eine Führung,
- Figur 3b: eine alternative Ausführung der Führung gemäß Figur 3a
- Figur 4: eine weitere alternative Ausführung der Führung gemäß Figur 3,
- Figur 5: eine zweite Ausführungsform der Vorrichtung.

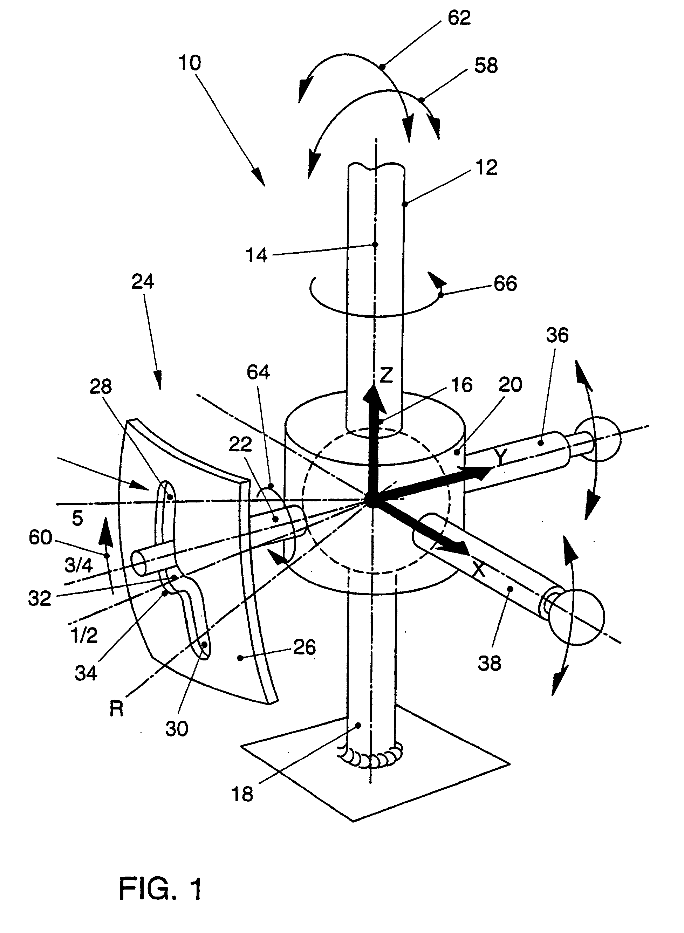

In der Figur 1 ist eine erste Ausführungsform der erfindungsgemäßen Vorrichtung zum Schalten dargestellt. Eine Betätigungseinrichtung 10 weist einen Schalthebel 12 auf, dessen Längsachse 14 sich in Richtung eines Pfeiles 16 erstreckt. Der Schalthebel 12 endet in einem zylindrischen Teil 20, in dem eine hier nicht weiter dargestellte gelenkige Lagerung des Schalthebels 12 auf einem Kugelzapfen 18 erfolgt. Der Kugelzapfen 18 ist ortsfest angeordnet.

Im Bereich des Teiles 20 und im wesentlichen senkrecht zu der Längsachse 14 des Schalthebels 12 ist eine Auskragung 22 vorgesehen, die mit einer Führung 24 zusammenarbeitet und drehfest mit dem Schalthebel 12 verbunden ist. Die Führung 24 besteht im wesentlichen aus einer ortsfest angeordneten Platte 26, die eine erste und zweite Aussparung 28, 30 aufweist. Die erste Aussparung 28 ist mit der zweiten Aussparung 30 mittels einer Übergangsaussparung 32 verbunden.

Die Längsachsen der ersten und zweiten Aussparung 28, 30 verlaufen im wesentlichen koaxial zu der Längsachse 14 der Betätigungseinrichtung 10. Das eine Ende der ersten Aussparung 28 ist als Aufnahme 34 ausgebildet und stellt den Beginn der Übergangsaussparung 32 dar, die in der zweiten Aussparung 30 mündet. Die zweite Aussparung 30 beginnt auf der Höhe des Endes der ersten Aussparung 28 und setzt sich koaxial zu der Längsachse 14 fort.

In Verlängerung zu der Auskragung 22 und rechtwinklig zu der Längsachse 14 ist ein Bolzen 36 vorgesehen, der mit einem hier nicht dargestelltem Wählseilzug zusammenarbeitet. Der Bolzen 36 ist der Auskragung 22 gegenüberliegend angeordnet.

Ein zweiter Bolzen 38 ist im wesentlichen rechtwinklig zu dem ersten Bolzen 36 angeordnet und dient über einem nicht dargestellten Schaltseilzug der Schaltung der Gänge.

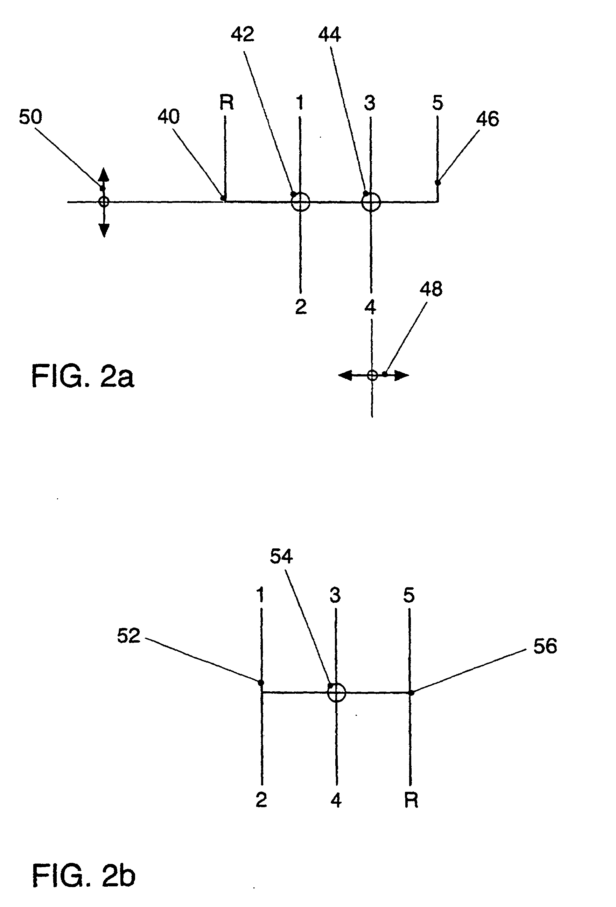

In den Figuren 2a und 2b ist jeweils ein Schaltbild eines gesonderten Gassen - Getriebes dargestellt. Das Gassen - Getriebe gemäß der Figur 2a weist vier Gassen 40 bis 46 und fünf Vorwärtsgänge sowie einen Rückwärtsgang auf, die vorliegend mit 1 bis 5 und R bezeichnet sind, wobei dem Rückwärtsgang R eine eigene Gasse 40 zugeordnet ist. Die Auswahl der einzelnen Gassen 40 bis 46 erfolgt durch eine entsprechende Bewegung des Schalthebels 12 gemäß einem Doppelpfeil 48, das Schalten der einzelnen Gänge gemäß einem Doppelpfeil 50.

Im Gegensatz dazu ist dem Rückwärtsgang R bei einem drei Gassen 52 bis 56 aufweisenden Gassen - Getriebe, wie es in der Figur 2b dargestellt ist, keine eigene Gasse zugeordnet. Vielmehr liegt er in einer gemeinsamen Gasse mit einem fünften Gang.

Die in der Figur 1 dargestellte Vorrichtung eignet sich für ein Gassen - Getriebe, bei dem dem Rückwärtsgang R eine eigene Gasse 40 zugeordnet ist. Dies kann, bei einem Vierganggetriebe, auch ein Drei - Gassen - Getriebe sein.

Für eine Auswahl der einzelnen Gassen 40 bis 46 wird der Schalthebel 12 in Richtung des Doppelpfeiles 58 bewegt (s. Figur 1), wodurch die Auskragung 22 gemäß einem Pfeiles 60 eine Schwenkbewegung erfährt. Innerhalb der jeweiligen Gasse erfolgt das Schalten in den gewünschten Gang mittels einer Bewegung des Schalthebels 12 in Richtung des Doppelpfeiles 62, welches eine Drehbewegung der Auskragung 22 gemäß dem Pfeil 64 hervorruft.

Bei einer Wahl der Gassen 42 bis 46 schwenkt die Auskragung 22 in der ersten Aussparung 28. In der den Gängen 1 / 2 zugeordneten Gasse 42 liegt die Auskragung 22 im wesentlichen in der Aufnahme 34. Ein weiteres Verschwenken gemäß dem Pfeil 60 wird durch die Platte 26 verhindert, und damit auch die Wahl der dem Rückwärtsgang R zugeordneten Gasse 40. Um diese Gasse 40 zu erreichen, muß die Auskragung 22 in der Übergangsaussparung 32 geführt werden, damit die Auskragung dann letztendlich in die zweite Aussparung 30 gelangt. Dafür ist eine Drehbewegung des Schalthebels 12 gemäß einem Pfeil 66 erforderlich. Sobald sich die Auskragung in der zweiten Aussparung 30 befindet, kann dann der Rückwärtsgang R geschaltet werden.

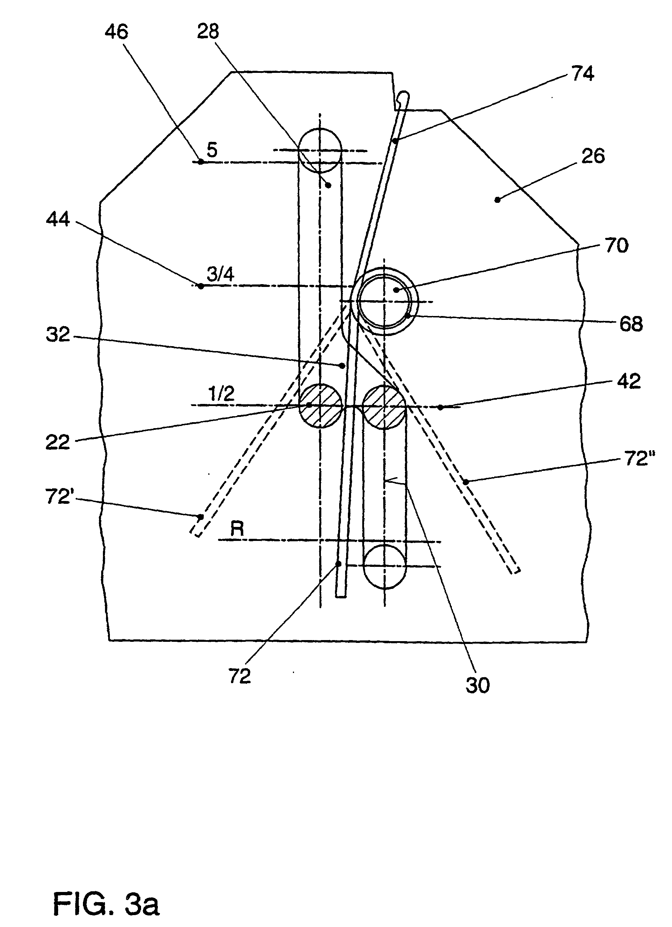

In der Figur 3a ist eine Draufsicht auf eine Platte 26 gemäß der Figur 1 gezeigt. Im Gegensatz zu der Platte 26 in der Figur 1 ist hier eine Drehfeder 68 an einem Bolzen 70 angeordnet, deren erster Schenkel 72 an der Auskragung 22 anliegt. Der andere Schenkel 74 ist ortsfest mit der Platte 26 gehalten. .

Befindet sich die Auskragung 22 in einer der Gassen 44 bzw. 46 entsprechenden Stellung, hat die Drehfeder 68 keine Wirkung. Der Schenkel 72 ist spannungsfrei, wie es durch die gestrichelte Darstellung 72' gezeigt ist.

Bei einer Verschiebung der Auskragung 22 in die der Gasse 42 zugeordneten Position, also einer Verschiebung der Auskragung 22 zu der Aufnahme 34, liegt der Schenkel 72 an der Auskragung 22 an. Die Drehfeder 68 ist in dieser Position vorgespannt und wirkt einem Wechsel in die zweite Aussparung 30 entgegen. In dieser Aussparung 30 besitzt die Drehfeder 68 ihre maximale Spannung, der Schenkel 72 ist maximal ausgelenkt, wie es sich aus der gestrichelten Darstellung des Schenkels 72" ergibt.

Bedingt durch diese Drehfeder 68 ist der Wahl der Gasse 46 des Rückwärtsganges R ein Widerstand entgegengesetzt.

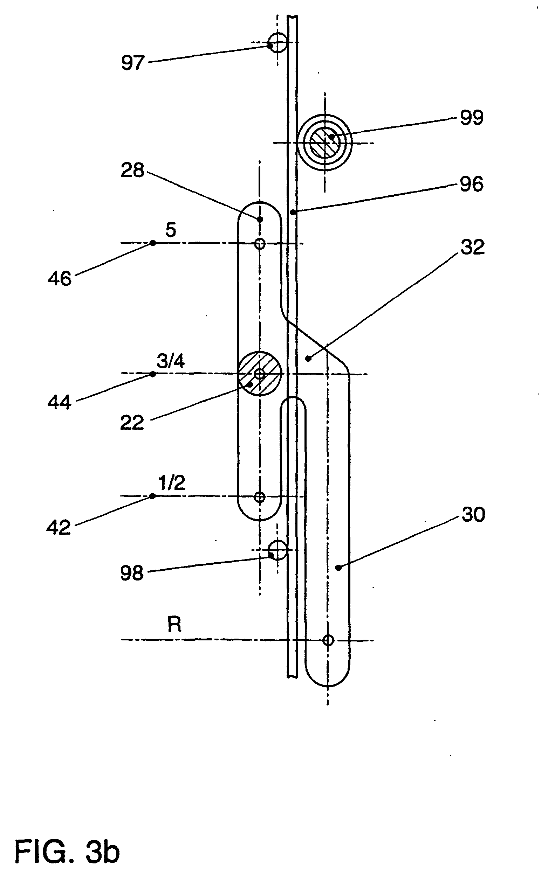

Gemäß Figur 3b ist es auch möglich, zur Sicherung der Vorwärtsganggassen 1/2, 3/4 und 5 zwischen der ersten Aussparung 28 und der zweiten Aussparung 30 eine Schenkelfeder 96 vorzusehen, die bei einer Verlagerungsbewegung der Auskragung 22 von der ersten in die zweite Aussparung eine in Richtung auf die erste Aussparung 28 gerichtete Rückstellkraft auf die Auskragung 22 ausübt. Die Schenkelfeder 96 ist dabei einerseits an einem ortsfesten Befestigungspunkt 99 angelenkt und stützt sich in nicht ausgelenkter Position an ihren beiden Enden an jeweils einem von zwei Anschlägen 97, 98 ab.

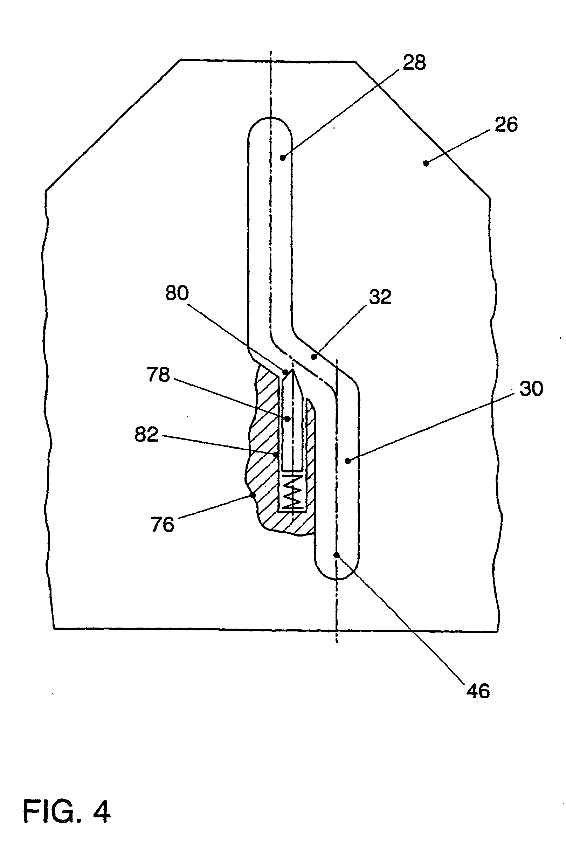

Eine Alternative zu der Drehfeder 68 ist in der Figur 4 dargestellt. Dort ist in der Übergangsgasse 32 ein verschiebbar gelagerter und von einer Druckfeder 76 beaufschlagter Bolzen 78 vorgesehen, der mit einem der Druckfeder 76 abgewandten Ende 80 in die Übergangsgasse 32 hineinragt. Zur Verschiebung der hier nicht dargestellten Auskragung 22 durch die Übergangsgasse 32 muß diese entgegen der Federkraft der Druckfeder 76 den Bolzen 78 in seiner Bolzenführung 82 drücken. Dies ergibt den Widerstand bei der Wahl der Gasse 46 des Rückwärtsganges R.

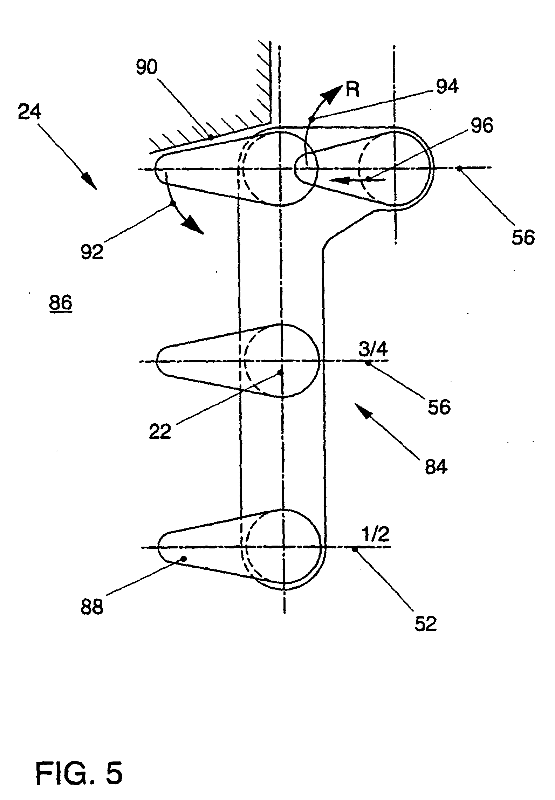

Eine alternative Führung 24 gemäß der Figur 5 weist eine L - förmige Aussparung 84 auf, in der die Auskragung 22 geführt ist. Vor oder hinter einer die Aussparung 84 begrenzenden Wandung 86 ist ein an der Auskragung 22 befestigter Ausleger 88 vorgesehen, der sich über die Wandung 86 erstreckt. In der Figurendarstellung ist die Auskragung 22 mit dem Ausleger 88 in allen Gassen 52 bis 56 dargestellt.

In der Gasse 56, in der sich auch der Rückwärtsgang R befindet, liegt der Ausleger 88 an einem Anschlag 90 an. Zu einem Schalten in den 5. Gang wird die Auskragung 22 gemäß einem Pfeil 92 verschwenkt. Diese Verschwenkung wird durch den Anschlag 90 nicht behindert.

Einem Schalten in den Rückwärtsgang R steht der Anschlag 90 entgegen. Zum Lösen dieser Sperre wird der hier nicht dargestellte Schalthebel 12 gemäß des Pfeiles 66 (s. Fig. 1) verdreht, wodurch der Ausleger 88 von dem Anschlag 90 frei kommt und der Rückwärtsgang R gemäß einem Pfeil 94 geschaltet werden kann.

Es versteht sich, daß der Verdrehung des Schalthebels 12 auch eine Federkraft entgegenwirken kann, wie es durch den Pfeil 96 angedeutet ist.

Diese Führung 24 eignet sich für 3-Gassen-Getriebe, mit einem Schaltbild nach Figur 2b.

### BEZUGSZEICHENLISTE

- 10: Betätigungseinrichtung
- 12: Schalthebel
- 14: Längsachse
- 16: Pfeil
- 18: Kugelzapfen
- 20: Teil
- 22: Auskragung
- 24: Führung
- 26: Platte
- 28: Aussparung
- 30: Aussparung
- 32: Übergangsaussparung
- 34: Aufnahme
- 36: Bolzen
- 38: Bolzen
- 40: Gasse
- 42: Gasse
- 44: Gasse
- 46: Gasse
- 48: Doppelpfeil
- 50: Doppelpfeil
- 52: Gasse
- 54: Gasse
- 56: Gasse
- 58: Doppelpfeil
- 60: Pfeil
- 62: Doppelpfeil
- 64: Pfeil
- 66: Pfeil
- 68: Drehfeder
- 70: Bolzen
- 72: Schenkel
- 72': Schenkel
- 72": Schenkel
- 74: Schenkel
- 76: Druckfeder
- 78: Bolzen
- 80: Ende
- 82: Bolzenführung
- 84: Aussparung
- 86: Wandung
- 88: Ausleger
- 90: Anschlag
- 92: Pfeil
- 94: Pfeil
- 96: Schenkelfeder
- 97: Anschlag
- 98: Anschlag
- 99: Befestigungspunkt
- R: Rückwärtsgang

## Patentansprüche

1. Vorrichtung zum Anwählen und Schalten zwischen vorgegebenen Positionen, nämlich zum Schalten zwischen Gängen eines Getriebes, mit einer Betätigungseinrichtung (1), mittels derer die Positionen ansteuerbar sind, wobei mehrere bevorzugte Position, nämlich Vorwärtsgänge und eine erschwert erreichbare, nicht bevorzugte Position, nämlich ein Rückwärtsgang gegeben ist, wobei die Betätigungseinrichtung (1) einen gelenkig gelagerten Schalthebel (12) aufweist und dem Schalthebel (12) eine Führung (24) zugeordnet ist und eine Bewegungsmöglichkeit des Schalthebels (12) entlang der Führung (24) begrenzt ist, **dadurch gekennzeichnet, daß** eine drehfest mit dem Schalthebel (12) verbundene Auskragung (22) vorgesehen ist, die mit der Führung (24) zusammenarbeitet und daß die Führung (24) derart angeordnet und ausgebildet ist, daß zum Anwählen und Schalten zwischen einem Vorwärtsgang und dem Rückwärtsgang eine Drehbewegung des Schalthebels (12) um seine Längsachse erforderlich ist

2. Vorrichtung nach Anspruch 1,
**dadurch gekennzeichnet, daß**
die Führung (24) eine Aussparung (28, 30 32; 84) aufweist, in die die mit der Betätigungseinrichtung (1) zusammenarbeitende Auskragung (22) eingreift.

3. Vorrichtung nach einem oder mehreren der vorhergehenden Ansprüche,
**dadurch gekennzeichnet, daß**
ein Schalten zwischen zwei bevorzugten Positionen eine zu der Drehbewegung unterschiedlich gerichtete Bewegung der Betätigungseinrichtung (1) erfordert.

4. Vorrichtung nach Anspruch 3,
**dadurch gekennzeichnet, daß**
die Auskragung (22) und die Führung (24) derart angeordnet und ausgebildet sind, daß eine Auswahl von Gassen (40 - 46; 52 - 56) eine Schwenkbewegung der Auskragung (22) und ein Schalten zwischen Positionen eine Drehbewegung um die Längsachse der Auskragung (22) hervorruft.

5. Vorrichtung nach einem oder mehreren der vorhergehenden Ansprüche,
**dadurch gekennzeichnet, daß**
der Drehbewegung eine Kraft, insbesondere eine Federkraft, entgegengerichtet ist.

6. Vorrichtung nach einem oder mehreren der vorhergehenden Ansprüche,
**dadurch gekennzeichnet, daß**
die bevorzugte Position in einer anderen Gasse (40) als die nicht bevorzugte Position angeordnet ist, daß die Führung (24) zwei Aussparungen (28, 30) und eine diese miteinander verbindende Übergangsaussparung (32) aufweist, daß die Längsachsen der beiden Aussparungen (28, 30) zueinander versetzt angeordnet sind, und daß die erste Aussparung (28) der bevorzugten und die zweite Aussparung (30) der nicht bevorzugten Position zugeordnet ist.

7. Vorrichtung nach einem oder mehreren der Ansprüche 2 bis 6,
**dadurch gekennzeichnet, daß**
die erste Aussparung (28) im Bereich der Übergangsaussparung (32) eine mit der Auskragung (22) zusammenwirkende, vorzugsweise halbkreisförmig ausgebildete, Aufnahme (34) aufweist.

8. Vorrichtung nach Anspruch 6 oder 7,
**dadurch gekennzeichnet, daß**
die beiden Aussparungen (28, 30) als gerade verlaufende, im wesentlichen parallel zueinander angeordnete Aussparungen (28, 30) ausgebildet sind.

9. Vorrichtung nach einem oder mehreren der Ansprüche 1 bis 5,
**dadurch gekennzeichnet, daß**
die Aussparung (84) in der Draufsicht L - förmig ausgebildet ist, daß der Auskragung (22) ein mit dieser drehfest verbundener Ausleger (88) zugeordnet ist, und daß einer Drehbewegung des Auslegers (88) in der bevorzugten Position ein Anschlag (90) entgegenwirkt.

10. Vorrichtung nach einem oder mehreren der Ansprüche 1 bis 9,
**dadurch gekennzeichnet, daß**
im Bereich der Übergangsaussparung (32) ein Federelement (74, 96) angeordnet ist.

11. Vorrichtung nach Anspruch 10,
**dadurch gekennzeichnet, daß**
das Federelement (74, 96) als Schenkelfeder mit einem verschwenkbaren Schenkel (72) ausgebildet ist.

## Claims

1. Device for selecting and shifting between predefined positions, namely for shifting between gears of a transmission, said device having an actuating device (1), by means of which the positions can be selected, a plurality of preferred positions, namely the forward gears, and one non-preferred position, namely the reverse gear, which is more difficult to reach, being provided the actuating device (1) having a shift lever (12), the latter being mounted on an articulated mounting, and a guide (24) being assigned to the shift lever (12), and the mobility of the shift lever (12) along the guide (24) being restricted, **characterized in that** a collar (22) which is fixedly in terms of rotation connected to the shift lever (12) and cooperates with the guide (24) is provided, and that the guide (24) is arranged and formed in such a way that a rotational movement of the shift lever (12) around its longitudinal axis is required to select and shift between a forward gear and the reverse gear.

2. Device according to Claim 1, **characterized in that** the guide (24) has a recess (28, 30, 32, 84), into which the collar (22) which cooperates with the actuating device (1) engages.

3. Device according to one or more of the previous claims, **characterized in that** a shift between two preferred positions requires a movement of the actuating device (1) in a different direction to the rotational movement.

4. Device according to Claim 3, **characterized in that** the collar (22) and the guide (24) are arranged and formed in such a way that a selection of gates (40 - 46; 52 - 56) gives rise to a pivoting movement of the collar (22), and a shift between positions gives rise to a rotational movement around the longitudinal axis of the collar (22).

5. Device according to one or more of the previous claims, **characterized in that** the rotational movement is opposed by a force, in particular a spring force.

6. Device according to one or more of the previous claims, **characterized in that** the preferred position is arranged in a gate (40) other than the non-preferred position, and that the guide (24) has two recesses (28, 30) and a transition recess (32) linking these with each other, and that the longitudinal axes of the two recesses (28, 30) are arranged in an offset position with respect to each other, and that the first recess (28) is assigned to the preferred position and the second recess (30) is assigned to the non-preferred position.

7. Device according to one or more of Claims 2 to 6, **characterized in that** the first recess (28) has a receptacle (34) in the area of the transition recess (32), the receptacle (34) interacting with the collar (22) and being preferably semi-circular in shape.

8. Device according to Claim 6 or 7, **characterized in that** the two recesses (28, 30) are formed as straight recesses (28, 30), which are substantially parallel to each other.

9. Device according to one or more of Claims 1 to 5, **characterized in that** the recess (84) is formed in the shape of an 'L' when viewed from above, and that the collar (22) is assigned an extension arm (88) which is connected fixedly in terms of rotation to the former, and that in the preferred position a stop (90) counteracts a rotational movement of the extension arm (88).

10. Device according to one or more of Claims 1 to 9, **characterized in that** a spring element (74, 96) is arranged in the area of the transition recess (32).

11. Device according to Claim 10, **characterized in that** the spring element (74, 96) is formed as a leg spring with a pivotable leg (72).

## Revendications

1. Dispositif de sélection et de commutation entre des positions prédéterminées, à savoir pour commuter entre des vitesses d'une boîte de vitesses, comprenant un dispositif d'actionnement (1) au moyen duquel les positions peuvent être commandées, plusieurs positions préférées, à savoir des vitesses de marche avant et une position non préférée, difficile à obtenir, à savoir une vitesse de marche arrière, étant données, le dispositif d'actionnement (1) présentant un levier de sélection (12) monté de manière articulée et une coulisse (24) étant associée au levier de sélection (12), et une possibilité de mouvement du levier de sélection (12) le long de la coulisse (24) étant limitée, **caractérisé en ce qu'**il est prévu une saillie (22) connectée fixe en rotation au levier de sélection (12), laquelle coopère avec la coulisse (24) et **en ce que** la coulisse (24) est disposée et conçue de telle sorte qu'un mouvement de rotation du levier de sélection (12) autour de son axe longitudinal soit nécessaire pour la sélection et la commutation entre une vitesse de marche avant et la vitesse de marche arrière.

2. Dispositif selon la revendication 1, **caractérisé en ce que** la coulisse (24) présente un évidement (28, 30, 32 ; 84) dans lequel la saillie (22) coopérant avec le dispositif d'actionnement (1) vient en prise.

3. Dispositif selon l'une ou plusieurs des revendications précédentes, **caractérisé en ce qu'**une commutation entre deux positions préférées requiert un mouvement du dispositif d'actionnement (1) orienté différemment par rapport au mouvement de rotation.

4. Dispositif selon la revendication 3, **caractérisé en ce que** la saillie (22) et la coulisse (24) sont disposées et conçues de telle sorte qu'une sélection de pistes (40 - 46 ; 52 - 56) provoque un mouvement de pivotement de la saillie (22) et une commutation entre des positions provoque un mouvement de rotation autour de l'axe longitudinal de la saillie (22).

5. Dispositif selon l'une ou plusieurs des revendications précédentes, **caractérisé en ce qu'**une force, notamment une force de ressort, est opposée au mouvement de rotation.

6. Dispositif selon l'une ou plusieurs des revendications précédentes, **caractérisé en ce que** la position préférée est disposée dans une autre piste (40) que la position non préférée, **en ce que** la coulisse (24) présente deux évidements (28, 30) et un évidement de transition (32) les reliant entre eux, **en ce que** les axes longitudinaux des deux évidements (28, 30) sont décalés l'un par rapport à l'autre et **en ce que** le premier évidement (28) est associé à la position préférée et le deuxième évidement (30) est associé à la position non préférée.

7. Dispositif selon l'une ou plusieurs des revendications 2 à 6, **caractérisé en ce que** le premier évidement (28) présente, dans la région de l'évidement de transition (32), un logement (34) réalisé de préférence en forme semi-circulaire, coopérant avec la saillie (22).

8. Dispositif selon la revendication 6 ou 7, **caractérisé en ce que** les deux évidements (28, 30) sont réalisés sous forme d'évidements (28, 30) s'étendant en ligne droite, essentiellement parallèlement l'un à l'autre.

9. Dispositif selon l'une ou plusieurs des revendications 1 à 5, **caractérisé en ce que** l'évidement (84) est réalisé en forme de L en vue de dessus, **en ce qu'**un bras (88), lui étant connecté fixe en rotation, est associé à la saillie (22) et **en ce qu'**une butée (90) agit à l'encontre d'un mouvement de rotation du bras (88) dans la position préférée.

10. Dispositif selon l'une ou plusieurs des revendications 1 à 9, **caractérisé en ce qu'**un élément de ressort (74, 96) est disposé dans la région de l'évidement de transition (32).

11. Dispositif selon la revendication 10, **caractérisé en ce que** l'élément de ressort (74, 96) est réalisé en tant que ressort à branches avec une branche (72) pivotante.
